# FASCICULE DE BREVET EUROPEEN

(11) **EP 2 456 822 B1**
(45) Date de publication et mention de la délivrance du brevet: **15.05.2019**
(21) Numéro de dépôt: 10742016.8
(22) Date de dépôt: 01.07.2010
(51) Int. Cl.: C08L 77/06, C08L 77/00, C08L 77/02

(54) **COMPOSITION A BASE DE POLYAMIDES, OBJET OBTENU A PARTIR D'UNE TELLE COMPOSITION ET LEURS UTILISATIONS**
POLYAMIDZUSAMMENSETZUNG, AUS EINER DERARTIGEN ZUSAMMENSETZUNG HERGESTELLTES OBJEKT UND VERWENDUNG
POLYAMIDE COMPOSITION, OBJECT PRODUCED FROM SUCH A COMPOSITION, AND USES THEREOF

(30) Priorité: 23.07.2009 FR 0955154
(43) Date de publication de la demande: 30.05.2012
(73) Titulaire: Arkema France, 92700 Colombes (FR)
(72) Inventeur: BRULE, Benoît, F-27170 Beaumont-le-roger (FR); RAMFEL, Barbara, F-27170 Barc (FR)
(74) Mandataire: Kling, Simone
(86) Numéro de dépôt international: PCT/FR2010/051377
(87) Numéro de publication internationale: WO 2011/010039

(56) Documents cités:
- EP-A- 0 272 503
- EP-A1- 0 580 387
- WO-A1-2007/047268
- US-A1- 2007 104 971

## Description

La présente invention se rapporte à une composition à base de polyamides, à son procédé de préparation, à son procédé de mise en forme, ainsi qu'à ses utilisations, notamment dans la fabrication d'objets divers, comme des biens de consommation courante tels que des équipements électriques, électroniques ou automobiles, du matériel médical et chirurgical, de l'emballage ou encore des articles de sport.

L'invention se rapporte plus particulièrement à une composition comprenant au moins deux polyamides, l'un d'eux répondant à la formule MXD.10/Z.

Parmi les polyamides que l'on connaît à ce jour, certains présentent un intérêt majeur du fait de leurs remarquables propriétés mécaniques, notamment en raison de leurs modules de traction et de flexion élevés.

On peut notamment citer les polyphtalamides (PPA) qui sont des polyamides semi-aromatiques qui présentent un module élevé, de l'ordre de 3 GPa. C'est également le cas du polyamide MXD.6, produit de la condensation de la MXD et de l'acide adipique, MXD désignant la méta-xylylène diamine ou un mélange de méta-xylylène diamine et de para-xylylène diamine.

Si les PPA et MXD.6 sont très satisfaisants en termes de propriétés mécaniques (en particulier module élevé), ils présentent toutefois deux inconvénients majeurs :
- premièrement, compte tenu de leur température de fusion élevée, les PPA et le MXD.6 sont des polyamides qui présentent une température de transformation élevée (typiquement supérieure à 280°C). En plus d'être consommatrice d'énergie, la mise en oeuvre à une température de transformation élevée limite l'introduction, dans les compositions à base de PPA ou de MXD.6, de certains renforts et/ou additifs qui se dégradent à de telles températures.
- deuxièmement, du fait de leur température de transition vitreuse (Tg) également élevée et de leur cinétique de cristallisation lente, la mise en forme du matériau à base de PPA ou de MXD.6 nécessite d'opérer à des températures de moule relativement élevées, typiquement de l'ordre de 120°C à 130°C (30 à 40°C au dessus de la Tg), pour obtenir une cristallisation maximale et donc conférer au matériau des propriétés mécaniques et de stabilité dimensionnelle optimales.

Plus particulièrement, lors de leur mise en forme par injection-moulage (ou moulage par injection), il est nécessaire d'utiliser des moules utilisant de l'huile comme fluide caloporteur, de tels moules étant plus contraignants d'utilisation et moins répandus chez les mouleurs que des moules utilisant de l'eau comme fluide caloporteur.

Pour optimiser la cristallisation d'une composition à base de MXD.6, l'article intitulé "Effect of Nucleating Additives on Crystallization of Poly(m-xylylene adipamide)" publié dans la revue Polymer Engineering and Science en 2007, pages 365-373, propose l'introduction d'agents nucléants, en l'espèce du talc et du PA6.6 dont la température de fusion est de l'ordre de 250°C.

Le polyamide MXD.10, produit de la condensation de la MXD et de l'acide sébacique, présente également de bonnes propriétés mécaniques, et notamment un module élevé.

Comme le MXD.10 présente une température de fusion (d'environ 193°C) inférieure à celle des PPA ou du MXD.6, sa température de transformation comprise entre 200°C et 270°C, et plus généralement comprise entre 210°C et 260°C, est moins élevée que celle des PPA et MXD.6, ce qui limite la consommation en énergie. On peut par ailleurs envisager des compositions à base de MXD.10 comprenant certains renforts et/ou additifs qui se dégradent aux températures de transformation des PPA et du MXD.6.

De plus, la densité du MXD.10 est inférieure à celle généralement observée sur les PPA ou le MXD.6. Ainsi, les objets obtenus à partir de compositions à base de MXD.10 présentent donc l'avantage d'être plus légers comparés à ceux obtenus à partir de compositions à base de PPA ou de MXD.6.

En revanche, comme dans le cas des PPA ou du MXD.6, une température de moule élevée (typiquement de l'ordre de 120°C) est nécessaire lors de sa mise en forme par injection-moulage pour assurer une cristallisation maximale du produit et donc conférer des propriétés mécaniques et de stabilité dimensionnelle optimales.

Pour améliorer les conditions de moulage d'une composition à base de MXD.10, notamment en abaissant la durée de l'étape de refroidissement lors de la mise en forme par injection-moulage, le document EP 0 272 503 A1 propose d'ajouter, à une composition comprenant 100 parties en poids de polyamide MXD.10, de 1 à 20 parties en poids d'un polyamide cristallin ayant une température de fusion supérieure d'environ 20 à 30°C à celle du MXD.10.

Le polyamide cristallin se comporte donc comme un agent nucléant, en l'absence de tout autre agent nucléant du type charge minérale, comme le talc précédemment mentionné.

S'il est effectivement indiqué, dans certains des exemples d'illustration de l'invention décrite dans le document EP 0 272 503 A1, que l'étape d'injection-moulage peut être effectuée dans un moule porté à des températures de 70°C, 100°C et 130°C, on observe toutefois que les compositions qui y sont décrites présentent les meilleures conditions de moulage, en particulier un cycle rapide, pour une température de moule de 130°C.

Le but de la présente invention est donc de remédier à l'ensemble des inconvénients précités et de proposer une composition, qui permette d'obtenir un matériau ou objet doté d'excellentes propriétés mécaniques, et notamment un module de l'ordre de 3 GPa, cette composition présentant par ailleurs simultanément :
- une température de transformation inférieure à celle des PPA et du MXD.6, qui soit de l'ordre de la température de transformation du MXD.10, c'est-à-dire avantageusement comprise entre 210°C et 260°C,
- une température de moule, notamment pour une mise en forme par un procédé de moulage par injection, qui soit compatible avec de l'eau comme fluide caloporteur, et donc typiquement inférieure à 100°C et, de préférence inférieure à 90°C.

La présente invention concerne donc une composition à base de polyamide du type précité, c'est-à-dire une composition comprenant au moins un premier polyamide et au moins un second polyamide, le premier polyamide répondant à la formule MXD.10 et au moins un deuxième polyamide telle que définie dans la revendication 1.

Ce deuxième polyamide au sens de l'invention, qui présente une température de fusion Tf₂, est un polyamide semi-cristallin, par opposition à un polyamide amorphe, dépourvu de température de fusion.

Les inventeurs ont observé que l'ajout de ce deuxième polyamide présentant une Tf₂ telle qu'indiquée ci-dessus permettait d'obtenir un matériau ou objet, à partir de la composition, qui présente des propriétés mécaniques élevées (module élevé), la composition présentant par ailleurs une température de transformation compatible avec l'introduction d'un ou de plusieurs renforts et/ou additifs qui se dégradent aux températures de transformation des PPA ou du MXD.6.

En outre, et de manière surprenante, ils ont observé que les propriétés mécaniques (module de traction) du matériau ou objet obtenu à partir de la composition selon l'invention sont très peu dépendantes de la température du moule choisie, notamment lors d'une étape de mise en forme par injection-moulage, grâce à une cristallisation améliorée du MXD.10 ou MXD.10/Z. La composition selon l'invention offre donc l'avantage de pouvoir être mise en forme au moyen de tout type de moules, que ceux-ci soient régulés par de l'eau ou par de l'huile comme fluide caloporteur. En particulier, on peut envisager une étape de mise en forme par injection-moulage à des températures de moule inférieures à celles connues de l'art antérieur et, notamment, inférieures à 100°C et avantageusement inférieures à 90°C.

On pourra en particulier se reporter à l'exemple décrit ci-après qui montre que des températures de moule de 90°C, voire de l'ordre de 35°C, sont effectivement envisageables. Il est également précisé que rien n'interdit d'envisager des températures de moule supérieures à 100°C, comme celles couramment utilisées avec les PPA ou le MXD.6.

Comparée aux compositions à base de PPA ou de MXD.6, la composition selon l'invention est moins consommatrice en énergie, la température de transformation et la température des moules étant plus faibles.

Selon l'invention, la température de fusion Tf₂ est préférentiellement telle que Tf₁-30°C ≤ Tf₂.

Il est précisé que, dans le cadre de la présente invention, les premier et deuxième polyamides sont des polyamides distincts.

La composition selon l'invention peut ne comprendre que les deux premier et deuxième polyamides.

Elle peut également comprendre les deux premier et deuxième polyamides et au moins un autre polyamide répondant à la définition du premier polyamide et/ou à la définition du deuxième polyamide.

Le premier polyamide de la composition selon l'invention répond à la formule MXD.10.

La proportion de Z dans la formule MXD.10/Z peut être comprise entre 0 et 10% en mol (bornes comprises) et, avantageusement, entre 0 et 5% en mol (bornes comprises).

Il est par ailleurs précisé ici que, sauf indication contraire, l'expression "compris(e) entre" utilisée dans la suite de cette description doit s'entendre comme incluant les bornes citées.

Dans la formule MXD.10/Z, Z correspond à un motif choisi parmi un motif obtenu à partir d'un aminoacide, un motif obtenu à partir d'un lactame et un motif répondant à la formule (diamine en Ca).(diacide en Cb), avec a représentant le nombre de carbones de la diamine et b représentant le nombre de carbones du diacide.

Ledit polyamide résulte de la polycondensation :
- de méta-xylylène diamine (également appelée MXD ou 1,3-xylylène diamine) ou d'un mélange de MXD et de para-xylylène diamine (également appelée PXD ou 1,4-xylylène diamine), la MXD étant majoritaire dans le mélange,
- d'acide sébacique, qui est un diacide linéaire aliphatique en C10, et
- d'un alpha-oméga aminoacide carboxylique, d'un lactame ou d'une diamine en Ca et d'un diacide en Cb, lorsque Z est présent.

Dans le cas où Z=0, le premier polyamide est alors un homopolyamide qui répond à la formule MXD.10.

Le premier polyamide de formule MXD.10, qui résulte donc de la polycondensation de la MXD (ou d'un mélange de MXD et de PXD comme indiqué ci-dessus) et de l'acide sébacique, correspond à une version particulièrement avantageuse de l'invention.

Lorsque Z est présent, le premier polyamide est alors un copolyamide.

Rien n'interdit toutefois d'envisager un premier polyamide qui présenterait trois, voire plus, motifs répétitifs distincts deux-à-deux.

Lorsque Z représente un alpha-oméga aminoacide carboxylique, il peut par exemple être choisi parmi l'acide 9-aminononanoïque (Z=9), l'acide 10-aminodécanoïque (Z=10), l'acide 12-aminododécanoïque (Z=12) et l'acide 11-aminoundécanoïque (Z=11) ainsi que ses dérivés, notamment l'acide N-heptyl-11-aminoundécanoïque.

Lorsque Z représente un lactame, il peut notamment être choisi parmi le caprolactame (Z=6) et le lauryllactame (Z=12).

Lorsque Z est un motif répondant à la formule (diamine en Ca).(diacide en Cb), la diamine en Ca peut être une diamine aliphatique, linéaire ou ramifiée, une diamine cycloaliphatique ou encore une diamine aromatique. Le diacide en Cb peut être un diacide carboxylique aliphatique, linéaire ou ramifié, un diacide cycloaliphatique ou encore un diacide aromatique.

Il est précisé que "a" représentant le nombre de carbones de la diamine en Ca et "b" représentant le nombre de carbones du diacide carboxylique en Cb. a et b sont de préférence chacun compris entre 6 et 36 atomes de carbone.

On rappelle que la composition selon l'invention peut comprendre un ou plusieurs premier(s) polyamide(s) répondant à la formule MXD.10 et/ou MXD.10/Z.

Le deuxième polyamide de la composition selon l'invention est le PA11.

Les inventeurs ont observé que l'introduction de ce deuxième polyamide permet un contrôle particulièrement efficace de la cristallisation de la composition à base de polyamide MXD.10 ou MXD.10/Z.

Ce résultat est particulièrement surprenant car, s'il est bien connu de l'art antérieur d'introduire un ou plusieurs agent(s) nucléant(s) pour amorcer la cristallisation d'une composition à base de polyamide(s), le deuxième polyamide utilisé ne répond pas à la définition des agents nucléants classiquement utilisés pour améliorer la cristallisation d'une telle composition : ce n'est ni un agent nucléant d'origine minérale, ni un polyamide cristallin tel qu'enseigné dans le document EP 0 272 503 A1 qui décrit l'utilisation d'un polyamide présentant une température de fusion supérieure d'au moins 20 à 30°C à celle du MXD.10.

Dans l'exemple qui sera décrit par la suite, on a même observé que la cristallisation d'une composition selon l'invention s'effectuait bien mieux en présence du deuxième polyamide tel que défini dans le cadre de la présente invention que la cristallisation d'une même composition dans laquelle le deuxième polyamide est un polyamide cristallin (PA6.10) présentant une température de fusion de 220°C, c'est-à-dire supérieure de plus de 20°C par rapport à la température de fusion d'environ 193°C du MXD.10.

La composition selon l'invention comprend ledit au moins deuxième polyamide dans une proportion pondérale comprise entre 0,1 à 20%, et avantageusement entre 1 à 10%, par rapport au poids total des premier(s) et deuxième(s) polyamides.

Le premier et/ou deuxième polyamide(s) de la composition peut(vent) être, en tout ou partie, bioressourcé(s), c'est-à-dire comporter du carbone organique issu de la biomasse et déterminé selon la norme ASTM D6866. Dans une telle hypothèse, on peut considérer que la composition selon l'invention est elle-même partiellement bioressourcée, ce qui présente un avantage par rapport aux compositions à base de polyamide(s) issues de matières premières fossiles.

En particulier, l'acide sébacique du motif MXD.10 et/ou le motif Z peut être bioressourcé. De même, le deuxième polyamide peut être bioressourcé, comme dans le cas particulier où le deuxième polyamide est le PA11, polyamide provenant de l'huile de ricin.

Selon une version avantageuse de l'invention, la composition peut en outre comprendre des renforts.

L'addition de renforts dans la composition de l'invention permet de renforcer certaines des propriétés mécaniques, notamment le module du matériau obtenu à partir de cette composition. On adapte la nature et la quantité de renforts à la valeur du module recherchée, qui peut ainsi atteindre des valeurs très nettement supérieures à 3 GPa, par exemple de l'ordre de 20 GPa dans le cas des fibres de verre.

Par renforts, on entend les billes, les fibres courtes ou longues, les fibres continues tissées ou non, un mat tissé ou non tissé ou encore des broyats, des farines, permettant l'augmentation du module lorsqu'ils sont combinés à des matrices polymères.

Les renforts peuvent être choisis par exemple parmi les billes de verre, des fibres qui peuvent être des fibres de verre, de carbone, des fibres polymériques, des fibres naturelles (par exemple végétales ou animales) et leurs mélanges.

Avantageusement, les renforts pourront être bioressourcés, c'est-à-dire comprendre du carbone organique issu de la biomasse et déterminé selon la norme ASTM D6866.

Les renforts bioressourcés susceptibles d'être utilisés dans le cadre de la présente invention sont les suivants :
- les fibres végétales qui comprennent les fibres provenant des poils séminaux de graines (coton, kapok), les fibres libériennes extraites de tiges de plantes (lin, chanvre, jute, ramie...), les fibres dures extraites de feuilles (sisal, abaca...), de troncs (chanvre de Manille, bois en général), d'enveloppes de fruits (noix de coco...),
- les fibres animales qui proviennent des poils, telle que la toison animale, et des sécrétions telle que la soie,
- les fibres de carbone ou nanotubes de carbone issus de matières premières bioressourcées,
- les fibres polymériques issues de matières premières bioressourcées,
- les broyats d'écorces ou de pépins (noisettes, noix..), de carapaces animales (crabes...), de graines (riz...).

Il est précisé que la température de transformation de la composition selon l'invention permet un choix plus large de renforts, par exemple de certaines fibres végétales, ce qui présente un réel intérêt économique et technique, notamment car le matériau ou objet obtenu à partir d'une composition comprenant de telles fibres végétales présente l'avantage d'être plus léger que celui obtenu à partir d'une composition comprenant certains autres renforts, du fait de la densité moindre de ces fibres végétales comparées à celle de ces autres renforts.

Dans une variante particulière de l'invention, les renforts sont avantageusement des fibres, préférentiellement des fibres de verre et/ou des fibres de carbone.

De manière préférée, la proportion pondérale des dits renforts est comprise entre 0 à 70%, avantageusement entre 15 et 65%, et préférentiellement entre 20 et 60%, par rapport au poids total de la composition selon l'invention.

Selon une autre version avantageuse de l'invention, la composition peut également comprendre au moins un additif couramment utilisé dans les compositions à base de polyamide(s).

Le choix de tels additifs est plus large que pour les compositions à base de PPA ou de MXD.6 du fait de l'abaissement de la température de transformation de la composition selon l'invention

Avantageusement, le ou les additif(s) pourra(ont) être bioressourcé(s), c'est-à-dire comprendre du carbone organique issu de la biomasse et déterminé selon la norme ASTM D6866.

La quantité et la nature de ce ou ces additif(s) qui peuvent être introduit(s) dans les compositions de l'invention seront bien évidemment adaptées en fonction du ou des effet(s) recherché(s).

A titre non limitatif, on peut citer au moins un additif choisi parmi les charges, les colorants, les stabilisants, notamment les stabilisants UV, les plastifiants, les modifiants chocs, les agents tensioactifs, les agents nucléants, les pigments, les azurants, les anti-oxydants, les lubrifiants, les ignifugeants, les cires naturelles et leurs mélanges.

Parmi les charges, on peut citer la silice, le kaolin, la magnésie, les scories et/ou l'oxyde de titane.

On peut également citer des charges conductrices telles que le noir de carbone, le graphite ou bien encore les nanotubes de carbone. De telles charges permettent de conférer des propriétés antistatiques à la composition de l'invention et donc, au matériau qui sera obtenu à partir de ladite composition.

Parmi les additifs, on peut également citer les agents nucléants connus de l'homme de l'art, comme le talc par exemple. Bien que non indispensables pour permettre la cristallisation de la composition selon l'invention, ils peuvent néanmoins être introduits dans cette dernière.

De manière avantageuse, la proportion pondérale du ou des dit(s) agent(s) nucléant(s) est comprise entre 0 à 5%, et avantageusement entre 0,3 et 4%, par rapport au poids total de la composition selon l'invention.

La composition peut également comprendre un ou plusieurs agent(s) ignifugeant(s) tel(s) que, par exemple, Mg(OH)₂, des pyrophosphates de mélamine, des cyanurates de mélamine, des polyphosphates d'ammonium, des sels métalliques de l'acide phosphinique ou de l'acide diphosphinique, ou encore des polymères contenant au moins un sel métallique de l'acide phosphinique ou de l'acide diphosphinique.

Le sel peut par exemple être choisi parmi le méthyléthylphosphinate d'aluminium et le diéthylphosphinate d'aluminium. Des mélanges contenant de tels sels métalliques sont commercialisés par la société Clariant sous la dénomination commerciale Exolit OP1311, OP1312, OP1230 et OP1314.

Il est précisé que la température de transformation de la composition selon l'invention permet un choix plus large d'agents ignifugeants, ce qui présente un réel intérêt économique et technique.

De préférence, la proportion pondérale du ou des agent(s) ignifugeant(s) est comprise entre 0 et 35%, avantageusement entre 10 et 30%, et préférentiellement entre 15 et 25%, par rapport au poids total de la composition selon l'invention.

Une composition avantageuse au sens de l'invention peut comprendre les proportions pondérales suivantes des différents composés suivants :
- de 10 à 100% d'un premier polyamide MXD.10/Z, de préférence du MXD.10, et d'un deuxième polyamide, de préférence du PA11, la proportion pondérale du deuxième polyamide représentant de 0,1 à 20% des premier et deuxième polyamides,
- de 0 à 70% de fibres de verre et/ou de carbone,
- de 0 à 5% d'un agent nucléant, tel que le talc,
- de 0 à 35% d'un agent ignifugeant.

La composition selon l'invention peut être utilisée pour constituer une structure.

Cette structure peut être monocouche lorsqu'elle n'est formée que de la composition selon l'invention.

Cette structure peut également être une structure multicouche, lorsqu'elle comprend au moins deux couches et que l'une au moins des différentes couches formant la structure est formée de la composition selon l'invention.

La structure, qu'elle soit monocouche ou multicouche, peut notamment se présenter sous la forme de fibres, d'un film, d'un tube, d'un corps creux ou d'une pièce injectée. L'invention se prête particulièrement bien à la réalisation d'une pièce ou d'un objet obtenu par un procédé de moulage par injection.

L'invention concerne également un procédé de préparation d'une composition de l'invention telle que définie ci-dessus.

Selon l'invention, la composition peut être préparée par toute méthode qui permet d'obtenir un mélange homogène des polymères et éventuels additifs et/ou autres renforts, entrant dans la composition selon l'invention.

Parmi ces méthodes, on peut notamment citer l'extrusion à l'état fondu, le compactage ou encore le malaxeur à rouleau.

Plus particulièrement, la composition selon l'invention est préparée par mélange à l'état fondu de tous les polymères et éventuels additifs et fibres puis est transformée, par exemple sous forme de granulés, par compoundage sur un outil connu de l'homme de l'art comme une extrudeuse bi-vis, un comalaxeur ou un mélangeur.

La composition selon l'invention obtenue par le procédé de préparation décrit ci-dessus peut être ensuite transformée pour une utilisation ou une transformation ultérieure connue par l'homme de l'art, notamment à l'aide d'outils tels qu'une presse à injecter ou une extrudeuse.

La composition selon l'invention peut également être introduite dans une extrudeuse bi-vis alimentant, en l'absence d'étape de granulation intermédiaire, une presse à injecter ou une extrudeuse selon un dispositif de mise en oeuvre connu par l'homme de l'art.

L'invention vise en particulier un procédé de mise en forme d'un objet obtenu à partir de la composition telle que définie précédemment, ledit procédé comprenant une étape de moulage par injection.

Un tel objet peut être obtenu par injection, par extrusion, par co-coextrusion, par multi-injection à partir d'au moins une composition telle que définie ci-dessus.

L'invention concerne enfin un objet obtenu à partir de la composition de l'invention ainsi que l'utilisation de cet objet.

Un tel objet peut avantageusement être utilisé dans les domaines de l'automobile, le bâtiment, les secteurs domestiques, électriques, de l'électronique, du médical ou encore du sport.

La composition selon l'invention présentant une densité plus faible que les compositions à base de PPA ou de MXD.6, un objet obtenu à partir d'une telle composition est donc plus léger pour un même volume.

La composition selon l'invention peut avantageusement être envisagée pour la réalisation de tout ou partie d'éléments de biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias. Ces éléments de biens d'équipements électriques et électroniques couvrent non seulement les parties structurelles de tels biens (boîtiers, coques...) mais également leurs éventuels accessoires associés (écouteurs, éléments de connectique, câbles...).

Elle peut être aussi utilisée pour la réalisation de tout ou partie d'équipements automobiles tels que connecteurs de tubes, pompes, pièces injectées sous capot moteur, pièces injectées type pare-chocs, planches de bord, habillage de portière.

Elle peut être également utilisée pour la réalisation de tout ou parties de matériel médical ou chirurgical, de l'emballage ou encore des articles de sport ou de loisirs, comme dans les équipements de vélo (selle, pédales) ou pour constituer des éléments rigides de chaussures, par exemple.

Elle peut encore être utilisée pour la réalisation de tout ou partie d'éléments d'équipements domestiques (climatiseur) ou électroménagers (cafetière, four, lave-linge, lave-vaisselle).

La présente invention va être maintenant décrite dans les exemples ci-dessous, de tels exemples étant donnés à but uniquement illustratif, et bien évidemment non limitatif.

### Préparation des compositions 1.1 à 1.5, 2.1 à 2.6 et 3

Les compositions ont été préparées à partir des produits suivants :
- **PA MXD.10** : homopolyamide obtenu par polycondensation de la 1,3-xylylènediamine et de l'acide décanedioïque (acide sébacique) comportant 57% de carbone bioressourcé (ARKEMA) et présentant une température de fusion de 193°C
- **PA 11** : homopolyamide obtenu par polycondensation de l'acide amino-11-undécanedioïque comportant 100% de carbone bioressourcé (ARKEMA) et présentant une température de fusion de 185°C
- **PA 6.10:** homopolyamide obtenu par polycondensation de l'hexane-diamine et de l'acide décanedioïque (ARKEMA) et présentant une température de fusion de 220°C
- **Talc Stéamic OOS DG** : agent nucléant (LUZENAC)
- **Fibres de verre** : renfort commercialisé sous la référence CT FT 692 (ASAHI)
- **Irganox 1010 :** anti-oxydant (CIBA)
- **Stéarate de Calcium** et **Cire E:** lubrifiant/démoulant (BASF et CECA, respectivement)

Dans une première partie de l'étude, des compositions ne contenant pas de fibres de verre sont préparées par mélange des différents constituants (compoundage) à l'aide d'une extrudeuse bi-vis co-rotative type Haake, à une température de consigne de 260°C.

Les différents constituants de ces compositions, dans les proportions pondérales respectives telle que reportées dans le Tableau 1, sont introduits via la trémie d'alimentation en 1^{er} fourreau.

**Tableau 1**

| Composition | 1.1 comp. | 1.2 comp. | 1.3 comp. | 1.4 inv. | 1.5 inv. |
|---|---|---|---|---|---|
| PA MXD.10 | 100 | 89.6 | 98.6 | 89.6 | 88.6 |
| PA 6.10 | - | 10 | - | - | - |
| Talc | - | - | 1 | - | 1 |
| PA 11 | - | - | - | 10 | 10 |
| IRGANOX 1010 | - | 0.4 | 0.4 | 0,4 | 0,4 |

Les compositions 1.1, 1.2 et 1.3 sont des compositions comparatives (comp.) tandis que les compositions 1.4 et 1.5 sont des compositions conformes à l'invention (inv.). En particulier, la composition 1.2 comp. est conforme à la composition enseignée par le document EP 0 272 503 A1.

Dans une deuxième partie de l'étude, des compositions contenant des fibres de verre sont préparées par mélange des différents constituants (compoundage) à l'aide d'une extrudeuse bi-vis co-rotative type MC26, à une température de consigne de 260°C.

Les différents constituants de ces compositions, dans les proportions pondérales respectives telle que reportées dans le Tableau 2, sont introduits via la trémie d'alimentation en 1^{er} fourreau, à l'exception des fibres de verre qui sont introduites en gavage latéral.

**Tableau 2**

| Composition | 2.1 comp. | 2.2 comp. | 2.3 comp. | 2.4 inv. | 2.5 comp. | 2.6 inv. |
|---|---|---|---|---|---|---|
| PA MXD.10 | 49.4 | 49 | 44.08 | 44.08 | 43.59 | 43.59 |
| PA 6.10 | - | - | 4.92 | - | 4.92 | - |
| Talc | - | - | - | - | 0.49 | 0.49 |
| PA 11 | - | - | - | 4.92 | - | 4.92 |
| Fibres de verre | 50 | 50 | 50 | 50 | 50 | 50 |
| Cire E | 0.3 | 0.3 | 0.3 | 0.3 | 0.3 | 0.3 |
| Stéarate de calcium | 0.3 | 0.3 | 0.3 | 0.3 | 0.3 | 0.3 |
| Irganox 1010 | - | 0.4 | 0.4 | 0,4 | 0,4 | 0,4 |

Les compositions 2.1 à 2.3 et 2.5 sont des compositions comparatives (comp.) tandis que les compositions 2.4 et 2.6 sont des compositions conformes à l'invention (inv.). En particulier, la composition 2.3 comp. est conforme à une composition enseignée par le document EP 0 272 503 A1.

Dans une troisième partie de l'étude, une composition 3 conforme à l'invention et contenant des fibres de verre est préparée par mélange (compoundage) à l'aide d'une extrudeuse bi-vis co-rotative type Werner 40, à une température de transformation de 260°C.

Les différents constituants de cette composition, dans les proportions pondérales respectives telle que reportées dans le Tableau 3, sont introduits via la trémie d'alimentation en 1^{er} fourreau, à l'exception des fibres de verre qui sont introduites en gavage latéral.

On notera que les différents constituants de la composition 3 sont les mêmes que ceux de la composition 2.6 figurant dans le Tableau 2.

**Tableau 3**

| Composition | 3 inv. |
|---|---|
| PA MXD.10 | 43,59 |
| PA 11 | 4,92 |
| Fibres de verre | 50 |
| Irganox 1010 | 0,4 |
| Cire E | 0,3 |
| Stéarate de Calcium | 0,3 |
| Talc Stéamic OOS DG | 0,49 |

### Injection des compositions 1.1 à 1.5, 2.1 à 2.6 et 3

A l'exception de la température du moule qui peut varier, les différentes compositions 1.1 à 1.5, 2.1 à 2.6 et 3 sont ensuite injectées dans les conditions suivantes :
- Température d'alimentation de la buse : 240/260°C
- Température du moule : 35°C ou 90°C ou 130°C
- Débit : 27 cm³ /s
- Temps de cycle : 60s (correspondant à un temps de maintien de 20s et à un temps de refroidissement de 40s)

### Caractérisation des matériaux

### -A- Etude de la cristallisation des compositions 1.1 à 1.5, par analyse DSC :

Des barreaux 80x10x4mm³ sont préparés à partir des compositions 1.1 à 1.5 par injection dans un moule à 90°C avec de l'eau comme fluide caloporteur. Un échantillon est prélevé dans ces barreaux pour analyse en DSC. Le protocole d'analyse utilisé est le suivant :
- équilibrage en température à 20°C,
- 1ère chauffe jusqu'à 280°C à une vitesse de chauffe de 20°C/min.

Au cours de la 1ère chauffe, l'énergie apportée au système permet la cristallisation de la part de la composition qui n'a pas cristallisé au cours de l'étape de transformation, ici l'injection. L'enthalpie de cristallisation alors mesurée (J/g) permet de quantifier le phénomène.

Ensuite, à la température de fusion, on assiste à la fusion de la composition, c'est-à-dire de la part de la composition qui a cristallisé au cours de l'étape d'injection ainsi que de la part de la composition qui a cristallisé durant la 1ère chauffe. L'enthalpie de fusion alors mesurée (J/g) permet de quantifier le phénomène.

Le ratio enthalpie de cristallisation (mesurée au cours de la 1ère chauffe de l'analyse DSC) / enthalpie de fusion (mesurée au cours de la 1ère chauffe de l'analyse DSC) permet de quantifier la capacité du système à cristalliser aisément au cours de l'étape de transformation par injection.

Plus ce ratio est faible, plus le système cristallise aisément au cours de l'étape de transformation, ce qui est le but poursuivi dans le cadre de cette invention.

Les résultats des analyses DSC sont reportés dans le Tableau 4 ci-dessous.

**Tableau 4**

| Composition | 1.1 comp. | 1.2 comp. | 1.3 comp. | 1.4 inv. | 1.5 inv. |
|---|---|---|---|---|---|
| Enthalpie de cristallisation (J/g) | 35.3 | 33.8 | 21.8 | 11.3 | 8.3 |
| Enthalpie de fusion (J/g) | 39.2 | 39.0 | 40.5 | 41.9 | 40.8 |
| Ratio enthalpie de cristallisation / enthalpie de fusion | 0.90 | 0.87 | 0.54 | 0.27 | 0.20 |

On constate que les compositions 1.4 et 1.5 selon l'invention ont un ratio enthalpie de cristallisation / enthalpie de fusion qui est moins élevé que les compositions 1.1, 1.2 et 1.3 comparatives. Ceci signifie que les compositions 1.4 et 1.5 selon l'invention cristallisent plus aisément que les compositions 1.1, 1.2 et 1.3 comparatives au cours de l'étape de transformation par l'injection.

En particulier, si on compare les ratios obtenus pour les compositions 1.2 et 1.4, on observe que le PA11, qui présente une température de fusion de 185°C a un pouvoir nucléant supérieur à celui du PA6.10 d'une température de fusion de 220°C. Cette observation va à l'encontre de l'enseignement du document EP 0 275 503 A1 qui préconisait d'introduire un polyamide cristallin présentant une température de fusion supérieure d'au moins 20°C à celle du MXD.10.

En comparant par ailleurs les ratios obtenus pour les compositions 1.3 et 1.4, on observe que le PA11 présente également un pouvoir nucléant supérieur à celui du talc. On notera enfin que la composition 1.5, comprenant à la fois du PA11 et du talc, donne la meilleure valeur de ratio enthalpie de cristallisation / enthalpie de fusion.

### -B- Etude de la cristallisation des compositions 2.1 à 2.6, par analyse DSC :

Des éprouvettes de traction de 2mm d'épaisseur ont été moulées par injection à partir des compositions 2.1 à 2.6 conformément au protocole de la norme ISO 527 1BA, dans un moule à 95°C, le temps permettant d'obtenir lesdites éprouvettes dit "temps de cycle" étant de 15s.

Des échantillons sont ensuite prélevés pour analyse en DSC. Le protocole d'analyse utilisé est le même que celui décrit ci-dessus pour l'analyse DSC des barreaux formés à partir des compositions 1.1 à 1.5.

Les résultats des analyses DSC sont reportés dans le Tableau 5 ci-dessous.

**Tableau 5**

| Composition | 2.1 comp. | 2.2 comp. | 2.3 comp. | 2.4 inv. | 2.5 comp. | 2.6 inv. |
|---|---|---|---|---|---|---|
| Enthalpie de cristallisation (J/g) | 16.4 | 17.8 | 13.4 | 7.6 | 9.0 | 4.3 |
| Enthalpie de fusion (J/g) | 25.6 | 24.7 | 25 | 23.5 | 24.6 | 21.8 |
| Ratio enthalpie de cristallisation / enthalpie de fusion | 0.64 | 0.72 | 0.54 | 0.32 | 0.37 | 0.20 |

On constate là encore que les compositions 2.4 et 2.6 selon l'invention ont un ratio enthalpie de cristallisation / enthalpie de fusion :
- qui est moins élevé que les compositions comparatives 2.1 et 2.2 qui ne comportent pas de deuxième polyamide, et
- qui est également moins élevé que les compositions comparatives respectives 2.3 et 2.5 qui comprennent du PA6.10 comme deuxième polyamide et, le cas échéant, du talc.

Les compositions 2.4 et 2.6 selon l'invention cristallisent plus aisément que les compositions comparatives 2.1, 2.2, 2.3 et 2.5 au cours de l'étape de moulage par injection.

Si on compare les ratios obtenus pour les compositions 2.3 et 2.4, on observe que le pouvoir nucléant du PA11 reste toujours bien supérieur à celui du PA6.10, même en présence de fibres de verre.

Ce constat reste vrai, même si on ajoute du talc comme agent nucléant aux compositions ; en effet, le ratio obtenu pour la composition 2.6 selon l'invention est plus faible que celui de la composition comparative 2.5.

On notera enfin que la composition 2.6, comprenant à la fois du PA11 et du talc, donne la meilleure valeur de ratio enthalpie de cristallisation / enthalpie de fusion.

### -C- Etude des propriétés mécaniques sur la composition 3 :

### Module de traction :

Des éprouvettes de traction de 4mm d'épaisseur sont préparées à partir de la composition 3 par injection dans un moule à différentes températures (35°C, 90°C et 130°C), conformément au protocole de la norme ISO 527 1A, le temps permettant d'obtenir lesdites éprouvettes dit "temps de cycle" étant de 40s.

Ces éprouvettes sont testées à sec sans conditionnement ou bien conditionnées pendant 15 jours en atmosphère contrôlée (à 23°C et sous 50% d'humidité relative).

Ces éprouvettes sont évaluées selon cette norme ISO 527. On mesure ainsi le module de traction (GPa).

### Choc Charpy :

Des barreaux 80x10x4mm³ sont préparés à partir de la composition 3 par injection dans un moule à différentes températures (35°C, 90°C et 130°C).

Ces barreaux sont évalués à sec sans conditionnement ou bien conditionnés pendant 15 jours en atmosphère contrôlée (à 23° et sous 50% d'humidité relative).

Ils sont testés en choc pendulaire Charpy selon la norme ISO 179-1eU avec un pendule de 7,5 Joules. On mesure ainsi l'énergie absorbée par les barreaux, exprimée en kJ/m².

On reporte dans les Tableaux 6 et 7 ci-dessous les résultats des mesures des modules de traction et du choc Charpy, en fonction de la température du moule d'injection. Le Tableau 6 fait état des mesures relevées sur les éprouvettes et barreaux testés à sec, sans conditionnement. Le Tableau 7 fait état des mesures relevées sur les éprouvettes et barreaux testés après un conditionnement de 15 jours en atmosphère contrôlée (à 23°C et sous 50% d'humidité relative).

**Tableau 6**

| | | Composition 3 | | |
|---|---|---|---|---|
| Température du moule d'injection | | 35°C | 90°C | 130°C |
| Module de traction (GPa) | à sec | 20 | 22 | 22 |
| Choc charpy entaillé à 23°C (kJ/m²) | à sec | 10 | 10 | 9,5 |

**Tableau 7**

| | | Composition 3 | | |
|---|---|---|---|---|
| Température du moule d'injection | | 35°C | 90°C | 130°C |
| Module de traction (GPa) | Conditionné | 20 | 22 | 22 |
| Choc charpy entaillé à 23°C(kJ/m²) | Conditionné | 10 | 10 | 9,5 |

On constate que la composition 3 selon l'invention possède des propriétés mécaniques similaires et optimales quelle que soit la température du moule d'injection utilisée et le conditionnement.

Les compositions de l'invention offrent donc l'avantage de pouvoir utiliser des moules régulés soit par de l'huile, soit par de l'eau.

## Revendications

1. Composition comprenant au moins un premier polyamide répondant à la formule MXD.10, résultant de la condensation de méta-xylylène diamine (MXD) ou d'un mélange de MXD et de para-xylylène diamine (PXD), la MXD étant majoritaire dans le mélange, d'acide sébacique, ledit premier polyamide présentant une température de fusion Tf₁,
et au moins un deuxième polyamide présentant une température de fusion Tf₂, dont Tf₁-40 °C ≤ Tf₂, **caractérisée en ce que** ledit au moins deuxième polyamide est le PA11 et **en ce que** ce deuxième polyamide est présent dans une proportion pondérale comprise entre 0,1 à 20%, par rapport au poids total des premier et deuxième polyamides.

2. Composition selon la revendication 1, **caractérisée en ce qu'**elle comprend ledit au moins deuxième polyamide dans une proportion pondérale comprise entre 1 à 10%, par rapport au poids total des premier et deuxième polyamides.

3. Composition selon l'une quelconque des revendications 1 ou 2, **caractérisée en ce que** le premier polyamide est l'homopolyamide MXD.10.

4. Composition selon l'une quelconque des revendications 1 à 3, **caractérisée en ce qu'**elle comprend en outre des renforts.

5. Composition selon la revendication 4, **caractérisée en ce que** les renforts sont des fibres.

6. Composition selon la revendication 5, **caractérisée en ce que** les fibres sont des fibres de verre et/ou des fibres de carbone.

7. Composition selon l'une des revendications 4 à 6, **caractérisée en ce qu'**elle comprend lesdits renforts dans une proportion pondérale comprise entre 0 (exclu) à 70% par rapport au poids total de la composition.

8. Composition selon la revendication 7, **caractérisée en ce qu'**elle comprend lesdits renforts dans une proportion pondérale comprise entre 15 et 65%, par rapport au poids total de la composition.

9. Composition selon la revendication 8, **caractérisée en ce qu'**elle comprend lesdits renforts dans une proportion pondérale comprise entre 20 et 60%, par rapport au poids total de la composition.

10. Composition selon l'une quelconque des revendications 1 à 9, **caractérisée en ce qu'**elle comprend en outre au moins un additif choisi parmi les charges, les colorants, les stabilisants, les plastifiants, les modifiants chocs, les agents tensioactifs, les agents nucléants, les pigments, les azurants, les anti-oxydants, les lubrifiants, les ignifugeants, les cires naturelles et leurs mélanges.

11. Composition selon la revendication 10, **caractérisée en ce qu'**elle comprend le(s) agent(s) nucléant(s) dans une proportion pondérale comprise entre 0 (exclu) à 5%, par rapport au poids total de la composition.

12. Composition selon la revendication 11, **caractérisée en ce qu'**elle comprend le(s) agent(s) nucléant(s) dans une proportion pondérale comprise entre 0.3 et 4%, par rapport au poids total de la composition.

13. Composition selon l'une des revendications 10 à 12, **caractérisée en ce qu'**elle comprend le(s) agent(s) ignifugeant(s) dans une proportion pondérale comprise entre 0 (exclu) à 35%, par rapport au poids total de la composition.

14. Composition selon la revendication 13, **caractérisée en ce qu'**elle comprend le(s) agent(s) ignifugeant(s) dans une proportion pondérale comprise entre 10 et 30%, par rapport au poids total de la composition.

15. Composition selon la revendication 14, **caractérisée en ce qu'**elle comprend le(s) agent(s) ignifugeant(s) dans une proportion pondérale comprise entre 15 et 25%, par rapport au poids total de la composition.

16. Utilisation d'une composition selon l'une quelconque des revendications 1 à 15 pour constituer une structure monocouche ou au moins une couche d'une structure multicouche.

17. Utilisation selon la revendication 16, **caractérisée en ce que** la structure se présente sous la forme de fibres, d'un film, d'un tube, d'un corps creux ou d'une pièce injectée.

18. Objet obtenu à partir d'une composition selon l'une quelconque des revendications 1 à 15.

19. Procédé de mise en forme d'un objet selon la revendication 18, **caractérisé en ce qu'**il comprend une étape de moulage par injection.

20. Utilisation d'un objet selon la revendication 19 dans les domaines de l'automobile, le bâtiment, les secteurs domestiques, électriques, de l'électronique, du médical ou encore du sport.

## Patentansprüche

1. Zusammensetzung, umfassend mindestens ein erstes Polyamid der Formel MXD.10 gebildet durch die Kondensation von meta-Xylylendiamin (MXD) oder einer Mischung von MXD und para-Xylylendiamin (PXD), wobei das MXD den Hauptteil der Mischung bildet, und Sebacinsäure, wobei das erste Polyamid eine Schmelztemperatur Tf₁ aufweist, und mindestens ein zweites Polyamid, das eine Schmelztemperatur Tf₂ aufweist, wobei Tf₁ - 40°C ≤ Tf₂ ist, **dadurch gekennzeichnet, dass** es sich bei dem mindestens einen zweiten Polyamid um PA11 handelt und dass das zweite Polyamid in einem Gewichtsanteil zwischen 0,1 bis 20 %, bezogen auf das Gesamtgewicht der ersten und zweiten Polyamide, vorliegt.

2. Zusammensetzung nach Anspruch 1, **dadurch gekennzeichnet, dass** sie das mindestens eine zweite Polyamid in einem Gewichtsanteil zwischen 1 bis 10 %, bezogen auf das Gesamtgewicht der ersten und zweiten Polyamide, umfasst.

3. Zusammensetzung nach Anspruch 1 oder 2, **dadurch gekennzeichnet, dass** es sich bei dem ersten Polyamid um das Homopolyamid MXD.10 handelt.

4. Zusammensetzung nach einem der Ansprüche 1 bis 3, **dadurch gekennzeichnet, dass** es außerdem Verstärkungsmittel umfasst.

5. Zusammensetzung nach Anspruch 4, **dadurch gekennzeichnet, dass** es sich bei den Verstärkungsmitteln um Fasern handelt.

6. Zusammensetzung nach Anspruch 5, **dadurch gekennzeichnet, dass** es sich bei den Fasern um Glasfasern und/oder Kohlefasern handelt.

7. Zusammensetzung nach einem der Ansprüche 4 bis 6, **dadurch gekennzeichnet, dass** sie die Verstärkungsmittel in einem Gewichtsanteil zwischen 0 (ausgeschlossen) bis 70 %, bezogen auf das Gesamtgewicht der Zusammensetzung, umfasst.

8. Zusammensetzung nach Anspruch 7, **dadurch gekennzeichnet dass** die Verstärkungsmittel in einem Gewichtsanteil zwischen 15 und 65 %, bezogen auf das Gesamtgewicht der Zusammensetzung, vorliegen.

9. Zusammensetzung nach Anspruch 8, **dadurch gekennzeichnet dass** die Verstärkungsmittel in einem Gewichtsanteil zwischen 20 bis 60 %, bezogen auf das Gesamtgewicht der Zusammensetzung, vorliegen.

10. Zusammensetzung nach einem der Ansprüche 1 bis 9, **dadurch gekennzeichnet, dass** sie außerdem mindestens ein Additiv umfasst, das aus Füllstoffen, Farbmitteln, Stabilisatoren, Weichmachern, Schlagzähigkeitsmodifikatoren, Tensiden, Nukleierungsmitteln, Pigmenten, Aufhellern, Antioxidantien, Gleitmitteln, Flammschutzmitteln, natürlichen Wachsen und Mischungen davon ausgewählt ist.

11. Zusammensetzung nach Anspruch 10, **dadurch gekennzeichnet, dass** sie das Nukleierungsmittel bzw. die Nukleierungsmittel in einem Gewichtsanteil zwischen 0 (ausgeschlossen) bis 5 %, bezogen auf das Gesamtgewicht der Zusammensetzung, umfasst.

12. Zusammensetzung nach Anspruch 11, **dadurch gekennzeichnet, dass** sie das Nukleierungsmittel bzw. die Nukleierungsmittel in einem Gewichtsanteil zwischen 0,3 bis 4 %, bezogen auf das Gesamtgewicht der Zusammensetzung, umfasst.

13. Zusammensetzung nach einem der Ansprüche 10 bis 12, **dadurch gekennzeichnet, dass** sie das Flammschutzmittel bzw. die Flammschutzmittel in einem Gewichtsanteil zwischen 0 (ausgeschlossen) bis 35 %, bezogen auf das Gesamtgewicht der Zusammensetzung, umfasst.

14. Zusammensetzung nach Anspruch 13, **dadurch gekennzeichnet, dass** sie das Flammschutzmittel bzw. die Flammschutzmittel in einem Gewichtsanteil zwischen 10 und 30 %, bezogen auf das Gesamtgewicht der Zusammensetzung, umfasst.

15. Zusammensetzung nach Anspruch 14, **dadurch gekennzeichnet, dass** sie das Flammschutzmittel bzw. die Flammschutzmittel in einem Gewichtsanteil zwischen 15 und 25 %, bezogen auf das Gesamtgewicht der Zusammensetzung, umfasst.

16. Verwendung einer Zusammensetzung nach einem der Ansprüche 1 bis 15 zur Bildung einer einschichtigen Struktur oder mindestens einer Schicht einer mehrschichtigen Struktur.

17. Verwendung nach Anspruch 16, **dadurch gekennzeichnet, dass** die Struktur in Faser-, Folien-, Rohr-, Hohlkörper- oder Spritzgussteilform vorliegt.

18. Gegenstand, erhalten aus der Zusammensetzung nach einem der Ansprüche 1 bis 15.

19. Verfahren zum Formen eines Gegenstands nach Anspruch 18, **dadurch gekennzeichnet, dass** es einen Spritzgussschritt umfasst.

20. Verwendung eines Gegenstands nach Anspruch 19 im Auto-, Bau-, Haushalts-, Elektro-, Elektronik-, Medizin- oder Sportsektor.

## Claims

1. Composition comprising at least one first polyamide corresponding to the formula MXD.10, resulting from the condensation of meta-xylylenediamine (MXD) or of a mixture of MXD and of para-xylylenediamine (PXD), the MXD being predominant in the mixture, and of sebacic acid, the said first polyamide exhibiting a melting point Mp₁, and at least one second polyamide exhibiting a melting point Mp₂, for which Mp₁ -40°C ≤ Mp₂, **characterized in that** the said at least one second polyamide is PA11 and **in that** this second polyamide is present in a proportion by weight of between 0.1% and 20%, with respect to the total weight of the first and second polyamides.

2. Composition according to Claim 1, **characterized in that** it comprises the said at least one second polyamide in a proportion by weight of between 1% and 10%, with respect to the total weight of the first and second polyamides.

3. Composition according to either one of Claims 1 and 2, **characterized in that** the first polyamide is the MXD.10 homopolyamide.

4. Composition according to any one of Claims 1 to 3, **characterized in that** it additionally comprises reinforcers.

5. Composition according to Claim 4, **characterized in that** the reinforcers are fibres.

6. Composition according to Claim 5, **characterized in that** the fibres are glass fibres and/or carbon fibres.

7. Composition according to one of Claims 4 to 6, **characterized in that** it comprises the said reinforcers in a proportion by weight of between 0 (excluded) and 70%, with respect to the total weight of the composition.

8. Composition according to Claim 7, **characterized in that** it comprises the said reinforcers in a proportion by weight of between 15% and 65%, with respect to the total weight of the composition.

9. Composition according to Claim 8, **characterized in that** it comprises the said reinforcers in a proportion by weight of between 20% and 60%, with respect to the total weight of the composition.

10. Composition according to any one of Claims 1 to 9, **characterized in that** it additionally comprises at least one additive chosen from fillers, dyes, stabilizers, plasticizers, impact modifiers, surface-active agents, nucleating agents, pigments, optical brighteners, antioxidants, lubricants, flame retardants, natural waxes and their mixtures.

11. Composition according to Claim 10, **characterized in that** it comprises the nucleating agent(s) in a proportion by weight of between 0 (excluded) and 5%, with respect to the total weight of the composition.

12. Composition according to Claim 11, **characterized in that** it comprises the nucleating agent(s) in a proportion by weight of between 0.3% and 4%, with respect to the total weight of the composition.

13. Composition according to one of Claims 10 to 12, **characterized in that** it comprises the flame-retardant agent(s) in a proportion by weight of between 0 (excluded) and 35%, with respect to the total weight of the composition.

14. Composition according to Claim 13, **characterized in that** it comprises the flame-retardant agent(s) in a proportion by weight of between 10% and 30%, with respect to the total weight of the composition.

15. Composition according to Claim 14, **characterized in that** it comprises the flame-retardant agent(s) in a proportion by weight of between 15% and 25%, with respect to the total weight of the composition.

16. Use of a composition according to any one of Claims 1 to 15 in order to form a monolayer structure or at least one layer of a multilayer structure.

17. Use according to Claim 16, **characterized in that** the structure exists in the form of fibres, of a film, of a tube, of a hollow body or of an injection-moulded part.

18. Object obtained from a composition according to any one of Claims 1 to 15.

19. Process for shaping an object according to Claim 18, **characterized in that** it comprises an injection-moulding stage.

20. Use of an object according to Claim 19 in the fields of the motor vehicle industry, the construction industry, the household or electrical sectors, electronics, medicine or else sport.
